# EUROPEAN PATENT APPLICATION

(11) **EP 2 429 192 A1**
(43) Date of publication of application: **14.03.2012**
(21) Application number: 10391001.4
(22) Date of filing: 17.08.2010
(51) Int. Cl.: H04N 7/26, H04N 7/46

(54) **Video signal processing**

(71) Applicant: Streamworks International S.A., 2146 Luxembourg (LU)
(72) Inventor: Peacock, Robert Brown, London E16 6SZ (GB); Ismael-Mia, Abdur-Rehman, London SE18 3RL (GB)
(74) Representative: Phillips & Leigh

(57) **Abstract**

A video compression unit (1) comprising pre-processing means, in which the pre-processing means is operatively arranged to pre-process at least a portion of an incoming video signal to reduce the complexity of a given number of pixels thereof; the pre-processed signal being suitable to be operated upon by an encoder means.

## Description

### Field of Invention

The present invention relates to the field of transmission or streaming of data to web enabled devices. More specifically, the present invention relates to the transmission of media content such as video or audio or multimedia data or their combination over the internet.

### Introduction

Early attempts to stream media content over networks and the internet were limited due to the combination of the processing power of the computer's CPU and available bandwidth. Modem computing devices such as personal digital assistants (PDAs), third generation (3G) mobile phones and personal computers have now been developed with high enough CPU power to process the media content. However, as the processing power of such computing devices has improved, the rate limiting step to reliable high quality broadcast of media content over public networks is still very much dependent upon last mile bandwidth, which is the physical network capacity of the final leg of delivering connectivity from a communications provider to a customer. As a result of encoding techniques standard media players such as Real Player® or Windows Media Player® will attempt to play a video after a certain proportion of the video content of the stream has been "buffered". If the incoming data bit rate is too low, the player will play up until the point where the buffer memory is empty, at which point the player will stop to allow the buffer memory to fill adequately again. Buffering the media content will not only result in frequent starts and stops throughout the video play which makes the viewing experience less pleasurable but buffering the media content can be slow to start, depending upon the bit rate of the media content being downloaded and the connection speed of the user. This is exacerbated where high end video media content such as internet TV which requires substantial bandwidth is streamed over the network, whereby the number of concurrent viewers accentuates delivery loss by the additional stress on the network, loading it with more data to simultaneously deliver over the last mile. In order to prevent the video content being buffered each time it is streamed over the network, media players can also function by downloading the video movie and storing the content within the cache or hard drive of the user's computer. However, such downloading techniques have been known to encourage piracy and cannot allow for transfer of data in real time which is essential for watching in real time or video on-demand.

In order to deliver high end media over the network without the excessive buffering delay and yet try to provide a good video quality at substantially lower bit rates than previously, it is customary to compress media files into a format such as an MPEG (Moving picture experts Group) LA Group H264 format, so that they can be easily streamed over a network, i.e. compression is used to reduce the size of the media stream. For both video and audio files, making the files smaller requires a "codec", or compression/decompression software. Various compression algorithms or codecs are used for audio and video data content. Codecs compress data, sometimes lowering the overall resolution, and take other steps to make the files smaller. However, such compression techniques can result in significant deterioration in the quality of the video. As a result, most streaming videos on line are preset so as to not fill the whole screen on a computer screen or LCD/TV or handheld device or smartphone. The reduction in video player size is the only way that current media-player based streaming delivery systems can deliver video without reducing the perceived quality of the media being delivered. Thus, if the streaming video is increased in size to fill a full screen or a large screen, there can be a noticeable drop in quality of the image due to severe pixilation as the compressed media files cannot withstand re-sizing. Thus there is a trade-off between the degree that the data file is compressed and the amount of loss of data that the video or audio signal can endure which will affect the overall quality of the streamed data. The greater proportion of the data that is compressed as a result of the codec's algorithms, the greater the reduction in quality of the data. Various documents have been published concerning attempts to mitigate data loss as a result of encoding the data stream content using compression algorithms or codecs. For example, international patent application WO2010/009540 (Headplay (Barbados, Inc.)) teaches a system for compressing digital video signals in a manner that prevents the creation of block artefacts or video distortion visible to the human eye and improves compression efficiency by the selective removal of data representing visually imperceptible or irrelevant detail.

Whilst codecs help to compress the data content to a size so that it can be streamed effectively, aggressive data compression for large data content files such as multi-media applications or real time video results in compression artefacts or distortion in the transmitted signal. The more aggressive the data compression, the greater the likelihood that some data may be discarded or altered that is incorrectly determined by an algorithm to be of little subjective importance, but whose removal or alteration is in fact objectionable to the viewer. An extreme case which is found e.g. in video-conferencing and real time broadcasting applications is where the codec algorithms break down due to an overload of data that is required to be compressed due to high demand at the user's end to an extent that the algorithms cannot effectively stream the data to the end user. In a worst case scenario, the signal breaks up, and the stream is disconnected.

An option to resolve the issue is to lower the frame rate of the video which means that fewer total images are transmitted and therefore less data are needed to recreate the video at the receiving end. The reduction in the frame rate results in flickering or perceptible jerky motion in the streamed video, the frame rate being slow enough that the user's eye and brain can sense the transitions between the pictures, resulting in a poor user experience and a product only suitable for such use as video - conferencing.

For the case of High Definition (HD) video content distribution over a network, it is necessary to have high bandwidth for both download and upload of the media content. Full HD (1080p, i.e. 1080 horizontal lines, progressive scan) video content in a common compression format, such as H.264, has around five times the amount of data of a comparable Standard Definition (SD) video content, and still cannot be called Full HD once compressed. Video content in 720p has around 2.5 times the amount of data compared with SD content (data taken from US2010/0083303 (Janos Redei)). Most broadband data communication technologies, such as, for example ADSL, provide limited bandwidth and may not support the bit rate of a compressed HD video signal. The limited bandwidth is a further critical bottleneck for HD content delivery or even real time broadcasting over the internet. Network architectures using optical fiber to replace all or part of the usual copper local loop used for telecommunications, such as symmetric Fiber-To-The-Home or Fiber-To-The-Premises (FTTH or FTTP), are very expensive and not widespread. In order for the HD content to be streamed over the internet, it may be converted to a different format and/or even edited, and thereby affecting the quality of data transmitted, resulting in High Resolution real time streaming, as opposed to true HD.

The goal of image compression is to represent an image signal with the smallest possible number of bits without loss of any perceived information, thereby speeding up transmission and minimizing storage requirements. The number of bits representing the signal is typically expressed as an average bit-rate (average number of bits per second for video). To reduce the quantity of data used to represent digital video images, video compression formats such as MPEG4 work by reducing information specifically in the spatial and temporal domains that are considered redundant without losing the perceptual quality of the image, otherwise known as lossy compression. Spatial compression is where unnecessary information within an image is discarded by taking advantages of the fact that the human eye is unable to distinguish small differences in a picture such as colour as easily as it can perceive changes in brightness, so in essence very small areas of colour can be "averaged out".

Common spatial compression methods typically use a discrete cosine transform (DCT) applied to pixel image blocks to transform each block into a frequency domain representation. Typically, DCT operates on blocks or macroblocks eight pixels wide by eight pixels high and thus, operates on 64 input pixels and yields 64 frequency domain coefficients. In more modem codecs such as h.263 and h.264, the block size is fixed at 16 pixels by 16 pixels. The DCT preserves all of the information in the eight by eight image block. However, the human eye is more sensitive to the information contained in DCT coefficients that represent low frequencies (corresponding to large features in the image) than to the information contained in the DCT coefficients that represent high frequencies (corresponding to small features). The DCT therefore is able to separate the more perceptually significant information from the less perceptually significant information. The spatial compression algorithm encodes the low frequency DCT coefficients with high precision, but uses fewer or no bits to encode the high frequency coefficients, thereby discarding information that is less perceptually significant. Theoretically, the encoding of the DCT coefficients is accomplished in two steps. First, quantization is used to discard perceptually insignificant information. Next, statistical methods are used to encode the remaining information using as few bits as possible. Other spatial reduction methods include fractal compression, matching pursuit and the use of discrete wavelet transforms (DWT).

Whereas spatial compression techniques encode differences within a frame, temporal compression techniques work on the principle that only changes from one frame to the next are encoded as often a large number of the pixels will be the same on a series of frames. Specifically, temporal compression techniques compares each frame in the video signal with a previous frame or a key frame and instead of looking at the straight difference or delta between the two frames, the technique uses motion compensation encoders to encode the differences between frames from a previous frame or a key reference frame in the form of motion vectors by a technique commonly known as interframe compression. Whenever the next frame is significantly different from the previous frame, the codec compresses a new keyframe and thus keyframes are introduced at intervals along the video. The compression process is usually carried out by dividing the image in a frame into a grid of blocks or macroblocks as described above and by means of a motion search algorithm to track all or some of the blocks in subsequent frames or essentially a block is compared, a pixel at a time, with a similarly sized block in the same place in the next frame and if there is no motion between the fields, there will be a high correlation between the pixel values but in the case of motion, the same or similar pixels values will be elsewhere and it will be necessary to search for them by moving the search block to all possible locations in the search area. Thus, the size of the blocks is crucial as too large blocks will cut out any movement between frames and too small blocks will result in too many motion vectors in a bit stream. The differences from the moved blocks are typically encoded in a frequency space using DCT coefficients. The transformed image is very unlikely identical to the real image from which it is based on as a result of video noise, lens distortion etc. and thus the errors associated with such a transformation are calculated by adding the difference between the transformed image and the real image to the transformed image.

Lossy video compression techniques try to achieve the best possible fidelity given the available communication bandwidth. Where aggressive data compression is needed to fit the available bandwidth, this will be at the expense of some loss of information which results in a visually noticeable deterioration of the video signal or compression artefacts when the signal is decoded or decompressed at the viewing equipment. As a result of the applied aggressive data compression scheme some data that may be too complex to store in the available data-rate may be discarded, or may have been incorrectly determined by the algorithm to be of little importance but is in fact noticeable to the viewer at the receiving or usage end.

Whilst advances in video compression have meant that it is possible to reduce the transmission bandwidth of a video signal, a method of streaming media content, particularly high resolution multi-media content from a service provider or a programming provider at the transmission end to a client's device at the user's end over an IP network, is thus needed that:-
i) significantly reduces the transmission bandwidth,
ii) does not excessively deteriorate the quality of the transmitted media content at the receiver's end and
iii) is able to cope with numerous multi-media services such as internet TV, real time video-on demand and video conferencing without any visually noticeable degradation to the quality of the video signal and transmission time.

### Summary of the Invention

The present applicant has discovered that many video data streams contain more information than is needed for the purpose of perceptible image quality, all of which has hitherto been processed by an encoder. The present applicant has discovered that by applying a pre-processing operation to at least a portion of a video signal prior to video compression encoding at the transmission end such that the at least portion of the video signal is seen as less complex by the video encoder, a lesser burden is placed on the encoder to compress the video signal before it is streamed on-line, thereby allowing the encoder to work more efficiently and substantially without adverse impact on the perceived quality of the received and decoded image. Typically, the programming or signal provider at the transmission end has control over the amount of video compression applied to the video signal before it is broadcast or streamed on-line. More specifically, the present invention provides a method of pre-processing at least a portion of an incoming video signal for supply to a video compression encoder, whereby the complexity of a given number of pixels of the video signal for supply to the encoder is reduced.

Complexity in this context includes the nature of and/or the amount of pixel data. For example, a picture may have more detail than the eye can distinguish when reproduced. For example, studies have shown that the human eye has high resolution only for black and white, somewhat less for "mid-range" colours like yellows and greens, and much less for colours on the end of the spectrum, reds and blues (Handbook of Image & Video Processing, A1 Bovik, 2^{nd} Edition). It is believed that the pre-processing operation reduces the complexity of the video signal by removing redundant signal data that are less perceptually significant, i.e. high frequency DCT coefficients, that cannot be achieved by the compression algorithms alone in a typical encoder or if aggressively compressed results in compression artefacts that are perceptually significant. This places a lesser burden on the encoder to compress the video signal since the signal has been simplified prior to feeding into the encoder and thus makes the video compression process more efficient.

The pre-processing operation may comprise the steps of:
a. sampling at least a portion of the incoming video signal to form a first video signal,
b. re-sampling at least a portion of said first video signal to form a second video signal such that the complexity of the second video signal is less than the complexity of the incoming video signal.

By sampling at least a portion of the incoming signal followed by a resampling of the sampled signal, the complexity of at least a portion of the resampled video signal is less than that of the incoming signal prior to video compression without any human perception of the reduction in the quality of the video signal, therefore reducing the extent to which the video signal needs to be aggressively compressed. Preferably, the process of sampling the video signal involves scaling the video signal. Video signal scaling is a widely used process for converting video signals from one size or resolution to another usually by interpolation of the pixels. Interpolation of the pixels may be by linear interpolation or non-linear interpolation or a combination of both. This has a number of advantages. Firstly, it reduces the extent to which the encoder compresses the video signal for lower bandwidth transmission and therefore reduces the degree of any noticeable video signal distortions. Secondly, in terms of real time or live video on demand applications such as internet TV or video conferencing as well as high resolution multi-media applications, it allows more efficient processing and transmission of the video signal since a proportion of the video signal does not need to undergo the complex compression algorithms or any compression of the signal that does occur is to a limited extent and therefore may be carried out substantially in real time or with only a slight delay. Whereas the encoded signal has to be decoded or interpreted for display by applying decoding algorithms which are substantially the inverse of the encoding compression algorithms, no inverse of the pre-processing step(s) need be applied in order to provide a video image at the viewing equipment which does not contain any degradation perceptible to the viewer.

Preferably, the method comprises the step of sampling the video signal in the horizontal direction. Spatial perceptual metrics applied to the human visual system have determined that we recognize more subtle changes in the vertical direction of an image compared to changes in the horizontal direction (Handbook of Image & Video Processing, A1 Bovik, 2^{nd} Edition). Thus changing the resolution in the horizontal direction has a less severe impact on the quality of the video signal or image as perceived by the human eye than changes made in the vertical direction. Preferably, step (a) comprises the step of sampling at least a portion of the incoming video signal in the horizontal direction so that it occupies a smaller portion of an active video signal. In the present invention, the term "active video signal" means the protected area of the signal that contains useful information to be displayed. For example, consider an SD PAL video signal format having 576 active lines or 720 x 576 pixels and that the protected area is selected to occupy the whole area of the signal, i.e. a size of 720 x 576 pixels. Sampling the video signal so that the protected area occupies a smaller portion of the video signal involves "squeezing" the protected area of the signal so that in one progressive frame the resultant image only occupies a smaller portion of the display screen, the remainder pixels being set by default to show black. Squeezing the video signal in the horizontal direction will result in black bars at either side of the protected area of the image whereby pixels that have been removed from the protected area of the image are set to a default value to show black. As a consequence based on a typical SD PAL video image format, the active video signal is smaller than the 720 x 576 pixel size. One method of sampling the video signal is by scaling at least a portion of the video signal or image as a consequence of changing the active picture pixel ratios in either the vertical or horizontal direction. There are many known techniques for sampling the video signal. These may involve but are not limited to interpolation of the pixels so that they occupy a smaller sized grid, each grid point or element representing a pixel. For example, the protected area of the video signal is mapped onto a pre-defined but smaller sized grid and those grid points that do not exactly overlap are either averaged out or cancelled out, .i.e. by being set to a default value to show black. Other methods involve cancelling out neighbouring pixels or a weighted coefficient method where the target pixel becomes the linearly interpolated value between adjacent original pixel values that are weighted by how close they are spatially to the target pixel. The resultant effect being that the video signal is "squeezed" to fit the smaller grid size.

Following the first sampling step (step (a)), the video signal may be further sampled (step (b)), preferably in the horizontal direction so that it is effectively stretched to occupy a portion that is substantially equal to the area occupied by the original incoming signal. Although a portion of the active signal has been removed from the first processing step, the second processing step uses an interpolation algorithm (which may be any suitable known interpolation algorithm) to upscale the active signal to the size occupied by the original incoming signal. This may involve mapping the pixel grid provided by the active video signal onto a larger grid, and those pixels that overlap with pixels in the smaller image are assigned the same value. Non-overlapping target pixel values may be initially interpolated from signal pixel values with spatial weighting as described for step (a) above. Although pixel data has been lost in the first sampling step, the upscaling interpolation step may be used in combination with various sophisticated feature detecting and manipulating algorithms such as known edge detecting and smoothing software. This can provide an image that as perceived by the human visual system is substantially similar to the video image from the original video signal. Any deterioration in quality of the video image as a result of the processing steps is not noticed by the human visual system. Nevertheless, the resultant video signal is less complex than the incoming video signal. This is due in part to the manner in which compression/decompression hardware and software can interpret information, more specifically relating to how the re-interpolated upscaled video signal contains quantifiably more pixels than the downscaled original signal, but where the upscaled video signal is seen by a codec as less complex. The upscaled signal contains additional pixels preferably in a horizontal direction obtained by looking at and mapping/interpolating neighbouring pixels. This is interpreted by the codec as additional but less complex data. As the amount of data seen by a streaming encoder is considered less complex, the efficiency of the encoder is increased, making a substantive live streaming experience far more accurate to actual live performances, as a real time encoder has less complex information to encode. Complementary efficiency gains may also be obtained at the decoding algorithm in the viewing equipment.

Preferably, the process of interpolation is carried out by the method of linear interpolation such that the resultant image is linearly scaled down or up depending upon whether the process is downscaling or upscaling respectively.

Optionally, the method of sampling at least a portion of the incoming video signal to form a first video signal and then further sampling of said at least portion of the first video signal occurs sequentially such that each time a portion of the signal is sampled by the first step (step a), the sampled signal is subsequently re-sampled. This is repeated until the entire incoming video signal has been sampled, i.e. the sampling process occurs in sequential steps.

The invention correspondingly provides a video compression unit comprising pre-processing means, in which the pre-processing means are operatively arranged to pre-process at least a portion of an incoming video signal to reduce the complexity of a given number of pixels thereof; the pre-processed signal being suitable to be operated upon by an encoder means.

The video compression unit may comprise:-
a. a first video sampling unit operatively arranged to sample at least a portion of the incoming video signal to form a first video signal,
b. a second video sampling unit operatively arranged to sample at least a portion of the first signal to form a second signal of lower complexity than the incoming video signal.

The video compression unit may comprise a controller for controlling steps (a) and (b) in sequence.

Preferably, the first video sampling unit comprises a first DVE unit and the second video sampling unit comprises a second DVE unit that work in tandem to sample and then re-sample at least a portion of the video signal sequentially.

A DVE unit, as commonly known in the art, is a Digital Video Effects processor, capable of digital manipulation of a video signal. Digital manipulation of a video signal can be provided by an aspect ratio converter. Thus the first video sampling unit may comprise a first aspect ratio converter, and the second sampling unit may comprise a second aspect ratio converter.

### Detailed Description

Further preferred features and aspects of the present invention will be apparent from the following detailed description of an illustrative embodiment, made with reference to the drawings, in which: -
Fig. 1 is a block diagram showing the arrangement of the components in the illustrative embodiment.
Fig. 2 is a perspective view of an image of a test card from a video signal source as it would appear on a standard 4:3 aspect ratio display format.
Fig. 3 is perspective view of the image of the test card from Fig. 2 following sampling the video signal so as to reduce the active image area by 40%.
Fig. 4 is a perspective view of an image of a test card that has been linearly squeezed in the horizontal direction.
Fig. 5 is a perspective view of an image after the signal from Fig. 3 has been further sampled so as to stretch the active image area by 167% to closely represent the size shown in Fig. 2.

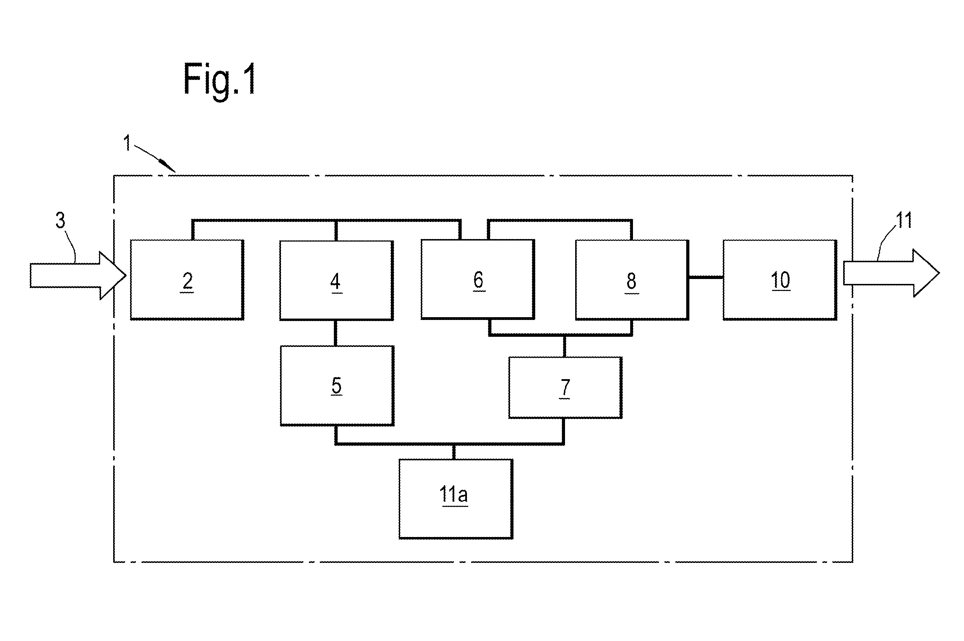

An arrangement 1 of components for pre-processing a video signal for subsequent encoding and transmission or distribution over an IP network by a service provider according to an embodiment of the present invention is shown in Fig. 1. The incoming or input signal 3 represents data associated with video usually presented as a sequential series of images called video frames and/or audio and which is to be converted to a format for transmission or streaming over an IP network. This is in comparison to a traditional signal that is broadcast over the air by means of radio waves or a satellite signal or by means of a cable signal. While in the following pre-processing video for encoding for "live" streaming/broadcast applications is particularly discussed, the invention is equally applicable to non real-time digital video encoding used e.g. for compressed storage, such as in hard drives, optical discs, fixed solid state memory, flash drives, etc.

The input signal 3 can be derived from a live broadcast signal such as internet TV or real time live TV or a conference call or from a server used to stream on-demand videos using various streaming media protocols. On-demand videos include but are not limited to episodes or clips arranged by title or channel or in categories like adult, news, sports or entertainment/music videos where the end user can choose exactly what he/she wants to watch and when to watch it. In addition, the captured input video signal or video footage according to the present invention is not restricted to any particular type of aspect ratio or PAL or NTSC or other formats and is applicable to a video signal broadcast in any aspect ratio format, such as standard 4:3 aspect ratio formats having, 720 x 576, 720 x 480 pixels and 640 x 480 pixels or widescreen 16:9 format commonly having 1920 x 1080, 1280 x 720, 72 0x 576 and 720 x 480 pixels.

The input signal 3 is fed into a noise reduction unit 4 via an input module 2 so as to condition the signal prior to input into sample processing units downstream of the noise reduction unit. The input module 2 is a coupling unit for allowing connection of the transmission cable to the box containing the arrangement of components according to the present invention, i.e. video-in. Likewise, the output module 10 (video-out) is a coupling unit for outputting the sampled signal 11 to a video compression encoder (not shown). The input and output coupling units can comprise but are not limited to the industrial standard HD/SDI connectors and interfaces. The noise reduction process is optional and is traditionally used in the industry to enhance the signal by the use of filtering methods to remove or substantially reduce signal artefacts or noise from the incoming signal. Such filtering methods are commonly known in the art and involve filtering noise from the video component of the signal such as Mosquito noise (a form of edge busyness distortion sometimes associated with movement, characterized by moving artifacts and/or blotchy noise patterns superimposed over the objects), quantization noise (a "snow" or "salt and pepper" effect similar to a random noise process but not uniform over the image), error blocks (a form of block distortion where one or more blocks in the image bear no resemblance to the current or previous image and often contrast greatly with adjacent blocks) etc. A noise reduction controller 5 is used to control the extent and the type of noise that is filtered from the signal. The type and level of noise present in a signal is dependent on the originating signal source, e.g. whether broadcast from a camera or from a satellite signal or cable. Whereas one noise filtration method is applicable to one type of signal, it may not be appropriate for another signal type and may result in filtration of real data which in turn will have an adverse effect on the signal quality. In the particular example shown in Fig. 1, the noise reduction module 4 is connected downstream of the first 6 and second 8 sample processing units. The position of the noise reduction module 4 is not restricted to that shown in Fig. 1. For example it can be connected downstream of the first and second sample processing units.

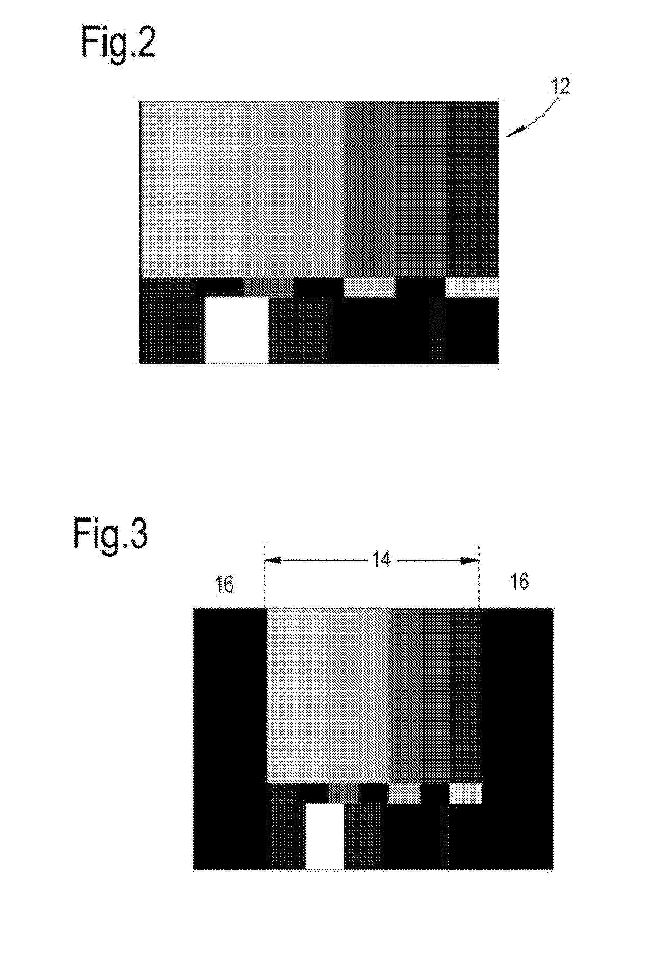

Following filtering the signal by the noise reduction unit, the filtered video component of the signal is then fed into a first video sampling unit 6 whereby at least a selected portion of the video signal is scaled so that it occupies a smaller portion of the space of the video signal. The video sampling processing technique according to an embodiment of the present invention involves a scaling operation whereby one or more pixels are interpolated using various per se known interpolation algorithms so as to map the selected image over a different number of pixels. Interpolation of the video signal is provided by a DVE unit, in the present embodiment the DVE unit is provided by an aspect ratio convertor. For explanatory purposes, consider the image 12 shown in Fig. 2 generated by a video signal and having an aspect ratio of 4:3 and a size 720 x 576 pixels. The vertical bars extend substantially across the horizontal direction and represent the 'active area' or 'protected area' of the image. For a screen 720 pixels wide and 576 pixels high, the active picture therefore substantially occupies 720 pixels in the horizontal direction. Various video sampling units are commercially available to vary the active picture size in either the vertical or horizontal direction, and are traditionally used to provide picture squeezing and expanding effects on a screen. In the particular embodiment, the present applicant has utilised the sampling unit present in an aspect ratio converter integrated within a Corio (RTM) C2-7200 video processor, having the facility to sample a video signal so that the active area of the image can occupy a different pixel area to the incoming video signal. Alternatively, the video sampling processing operation can be performed by the use of software or firmware.

According to studies into the psychophysics of vision (Handbook of Image & Video Processing, A1 Bovik, 2nd Edition), the limit at which the human visual system can detect changes or distortion in an image is more sensitive in the vertical direction than in the horizontal direction. Therefore, any changes made to the image are preferably primarily focused in the horizontal direction. However, this is not to say that changes in the vertical direction are ruled out, but are preferably kept to an extent that is not discernible to the human eye. In the particular example, shown in Fig. 3, the first video sampling unit 6 samples the video signal so that the active area of the image occupies a smaller portion 14 of the video signal in the horizontal direction. In the particular example, the sampled video signal occupies 60% of its original size in the horizontal direction (represented by 14 in Fig. 3) and therefore the active area of the image occupies 0.6 x 720 pixels (= 432 pixels). The remaining 288 pixels have been removed or set to a default pixel value to show black and thus, when viewed on a screen, black bars or pillars 16 will appear at either side of the active area of the image. The scaling operation has the effect of squeezing the active area over a smaller number of pixels or pixel grid in the horizontal direction. Theoretically, such scaling operations involve cancelling one or more neighbouring pixels by a process of interpolation or involve a weighted coefficient method whereby the target pixel becomes the linearly interpolated value between adjacent points that are weighted by how close they are spatially to the target pixel. Therefore such scaling reduces the effective content of the video signal. This could be by a linear interpolation technique whereby the scaling process is uniformly carried out across the width of the image, i.e. the middle of the image is uniformly squeezed or stretched to the same extent as the edges of the image, or by a non-linear interpolation technique, in which different parts of the image are "squeezed" to a different extent, typically the left and right extremities being squeezed more than the middle.

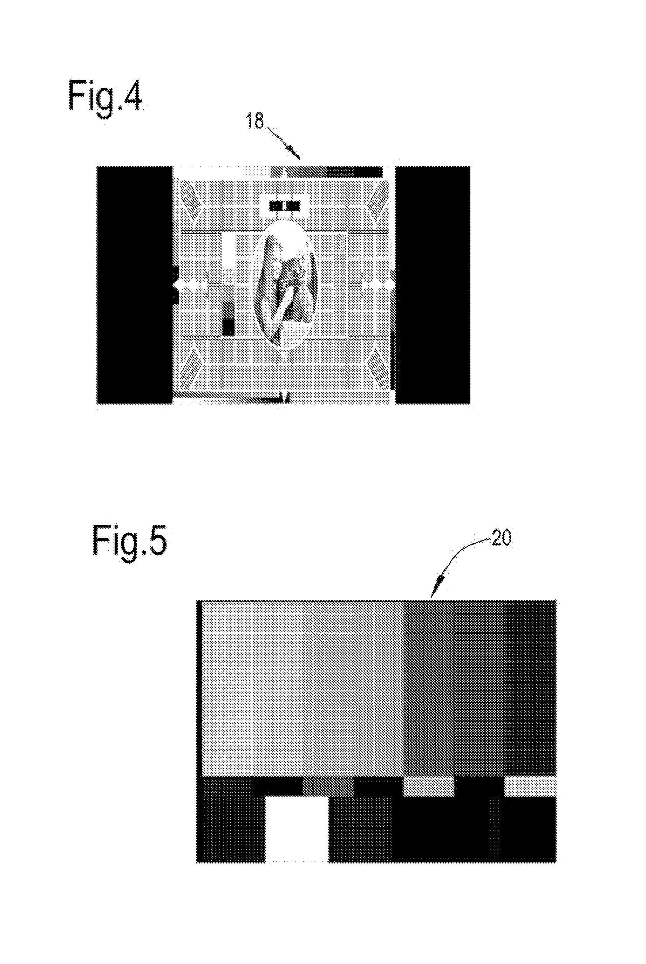

The cancelled pixels carry little data of significance to human visual perception and therefore the overall complexity of the video signal has been reduced without reducing perceived image quality. Downstream of the first video sampling unit 6 is a second sampling unit 8 (see Fig. 1) connected in series with the first sampling unit 6. As shown in Fig. 2, based on the reduction carried out by the first video sampling unit, the image from the first video sampling unit is scaled up so as to occupy substantially the same pixel grid as the image in the input video signal. In this case, the image 20 (see Fig. 5) is increased proportionally to the nearest pixel by a factor of 167% in the horizontal direction (although the true increase would be 166.66%, the test unit is not capable of sub- pixel resolution). By means of the second video sampling unit, the active area of the image (represented by 20 in Fig. 5) is sampled so that it is mapped onto a larger pixel area, in this case, 720 pixels in the horizontal direction. The 288 raw pixel data per line are lost in the first processing operation and the remaining 432 pixels are re-sampled in the second sampling processing unit using any suitable mathematical algorithm known in the art. These include but are not limited to feature and/or edge detection software algorithms. However, the additional pixel data are based on interpolation techniques and therefore, based on a mathematical technique whereas the original pixels carry the raw data. Thus, the overall information contained after the two stage process is less complex than the information carried by the original input video signal because the additional pixels, in this case 288 pixels, have been made up mathematically making the task of encoding the video signal by compression techniques easier and less complicated.

In the particular embodiment, the first sampling unit 6 and second sampling unit 8 process the video signal in real time, for example in Europe this is 25 frames per second, and in the USA this is 29.97 frames per second (commonly rounded up to 30 frames per second to compensate). Thus at each stage of the two stage sampling operation, the first video sampling unit samples at least a portion of the video signal frame by frame in real time, and the second video sampling unit re-samples the sampled video signal frame by frame in real time. This is repeated for the series of images or frames in the video signal. To control the operation of the first sample processing step in conjunction with the second sample processing step, a control unit 7 connected to the first video sampling unit 6 and the second sampling unit 8 controls the sampling process as a two stage process and therefore, as each signal is sampled by the first sampling unit, it is sequentially re-sampled by the second sampling unit in real time. For example, by applying a reduction of 40% to the signal in the first sampling unit, the control system will apply an increase of 167% to the signal in the second sampling unit. Although the particular embodiment shows two sample processing units for sampling the video signal, the number of sampling and re-sampling iterations is not necessarily restricted to being sampled by a two stage process in order to reduce the complexity or data content of the video signal and can be sampled by more than two sequential sampling units. However, as data is lost from each downscaling process, the extent or amount to which the video signal undergoes the first sampling operation needs to be balanced to the extent that there is no noticeable change in the quality of the video image as perceived by the human visual system once it is re-sampled by the upscaling sampling unit(s). In one embodiment, the sampling and re-sampling process can be performed by a succession of more than two sampling units connected in series so that the video signal is sampled and re-sampled more than twice. This may be beneficial where there would be a less noticeable distortion to the quality of the video footage if the data content is removed in a series of smaller steps as opposed to removing a large amount of the data content at any one time and the final sampling unit re-establishes the video image to substantially the original size after the downscaling process.

A third control system 11 shown in Fig. 1, connected to the control unit 5 of the noise reduction unit and the control unit 7 operating the first and second sampling units allows the user to automatically control the extent to which the video component and/or the audio component of the signal is conditioned by the noise reduction unit and the first and second sampling units so as to obtain a desired signal quality. Whilst one control setting of the noise control unit 5 and the control unit 7 operating the first and second sampling units is applicable to one signal type, it may not be applicable for a another signal type. The signal type depends on the originating signal source, e.g. whether from a camera or a satellite signal or a cable signal and differently originating signals may contain different amounts or types of noise. For example the third control system 11 may have pre-set options to cater for the different signal types and types of data that are streamed, i.e. adult, sports, news, video on demand etc. These pre-set options can be based on trial and error investigations by varying the setting of the noise reduction unit and the video sampling units for different signal types so as to provide the best signal quality. Too much noise filtration results in loss of valuable data whereas too little noise filtration results in more data than is needed for video compression.

Any one or combination of the individual components of the pre-processing arrangement 1 shown in Fig. 1 can be individually or collectively housed in an appropriate container or equally be in the form of one or more electronic chips mounted on an electronic board or card for connection to a motherboard of a processing unit or computer such as a personal computer. Alternatively, the functions of the noise reduction units and the sampling units can be performed by software or firmware, each software type providing the functionality of the different stages shown in Fig.1.

The invention correspondingly provides a computer readable storage device comprising one or more software or firmware components for pre-processing an incoming video signal according to the methods described above.

A typical television picture from a video signal contains a safe area which is the area of the screen that is meant to be seen by the viewer. This safe area includes the 'title safe area', a rectangular area which is far enough in from the edges of the safe area such that text or graphics can be shown neatly within a margin and without loss or distortion. On the other hand, the action safe area, which is larger than the title safe area, is considered as a margin around the displayed picture from which critical parts of the action are generally excluded, to create a buffer around the edge of the screen so that critical elements are not lost at the edge of the screen. Beyond the action safe area is the 'overscan', which is the area that is not meant to be shown on most consumer television screens, and typically represents 10% of the video image. As a result, the broadcaster intentionally places elements in this area not intended to be seen by the viewer. Traditionally, the video signal contains information from the overscan which is fed directly into a video streaming encoder and therefore, part of the encoded video signal also encodes additional wasted space. The present applicant has realised that by removing the component of the video signal associated with the overscan, the complexity of the video signal that is subsequently encoded can be further reduced. This is achieved by increasing the size of the safe area in the both the vertical and horizontal direction by an amount proportional to the area occupied by the overscan and thus, any data beyond the overscan is automatically lost due to the limited size of the screen in the horizontal or vertical direction (in this case 720 pixels in the horizontal direction and 576 pixels in the vertical direction). By the same explanation above with respect to the sampling process, the enlarged image is less complex than the original signal due to the absence of complex pixel data and the presence of mathematically derived pixel data which carries less data.

## Claims

1. A method of pre-processing at least a portion of an incoming video signal (3) for supply to a video compression encoder, whereby the complexity of a given number of pixels of the video signal for supply to the encoder is reduced.

2. A method as claimed in claim 1, in which the pre-processing comprises the steps of:-
a. sampling at least a portion of the incoming video signal (3) to form a first video signal, and
b. re-sampling at least a portion of said first video signal to form a second video signal such that the complexity of the second video signal is less than the complexity of the incoming video signal (3).

3. A method as claimed in claim 2, wherein steps (a) and (b) comprise the steps of scaling said incoming video signal (3) and first video signal.

4. A method as claimed in claim 3, wherein step (a) comprises the step of downscaling said incoming video signal (3) in the horizontal direction and step (b) comprises the step of upscaling said first video signal in the horizontal direction.

5. A method as claimed in any of claims 2-4, wherein step (a) comprises the step of sampling said at least portion of said incoming video signal (3) in the horizontal direction so that it occupies a smaller portion of the active video signal and step (b) comprises the step of re-sampling said at least portion of said first video signal in the horizontal direction so that the portion of the second video signal occupied by the active video signal is substantially equal to the portion of the incoming video signal (3) occupied by the active video signal.

6. A method as claimed in any of the preceding claims, wherein step (a) and/or step (b) is/are carried out by interpolation of the pixels in said at least a portion of the respective video signals.

7. A method as claimed in claim 6, wherein interpolation of the pixels is by means of linear interpolation of said at least portion of the pixels.

8. A method as claimed in any of the preceding claims, further comprising the step of filtering artifacts from the video signals.

9. A video compression unit (1) comprising pre-processing means, in which the pre-processing means are operatively arranged to pre-process at least a portion of an incoming video signal to reduce the complexity of a given number of pixels thereof; the pre-processed signal being suitable to be operated upon by an encoder means.

10. A video compression unit (1) as defined in claim 9, comprising:-
a. a first video sampling unit (6) operatively arranged to sample at least a portion of the incoming video signal (3) to form a first video signal, and
b. a second video sampling unit (8) operatively arranged to re-sample at least a portion of said first video signal to form a second video signal of lower complexity than the incoming video signal (3).

11. A video compression unit (1) as defmed in Claim 10, comprising a controller (7) for controlling step (a) in sequence with step (b).

12. A video compression unit (1) as defined in Claim 9 or 10, wherein the first video sampling unit (6) and the second video sampling unit (8) each comprise a video scaling unit.

13. A video compression unit (1) as defined in any of Claims 10 to 12, wherein the first video sampling unit comprises a first DVE unit and the second video sampling unit comprises a second DVE unit.

14. A video compression unit (1) as defined in Claim 13, wherein the first DVE unit comprises a first aspect ratio converter and the second DVE unit comprises a second aspect ratio converter.

15. A video compression unit (1) as defined in any of the claims 10 to 14, further comprising a noise reduction module (4) to filter noise from at least a portion of either or both video signals.

16. A video compression unit (1) as defined in Claim 15, wherein the noise reduction module (4) is connected upstream of the first signal processing unit (6) so as to filter noise from said at least a portion of the incoming video signal (3) before transmission to the first video sampling unit (6).

17. A computer readable storage device comprising one or more software or firmware components for pre-processing an incoming video signal according to the method of any of claims 1-8.
